# EUROPEAN PATENT APPLICATION

(11) **EP 2 688 358 A1**
(43) Date of publication of application: **22.01.2014**
(21) Application number: 12758275.7
(22) Date of filing: 15.03.2012
(51) Int. Cl.: H04W 84/12, H04L 9/32, H04W 12/06

(54) **CONTROL DEVICE, TERMINAL DEVICE, AND COMMUNICATION SYSTEM**

(30) Priority: 17.03.2011 JP 2011059807
(71) Applicant: Panasonic Corporation, Osaka 571-8501 (JP)
(72) Inventor: OHIRA, Yuki, Osaka 540-6207 (JP)
(74) Representative: Vigand, Philippe
(86) International application number: PCT/JP2012/001816
(87) International publication number: WO 2012/124339

(57) **Abstract**

A control device (200) includes: an authentication unit (211) that performs authentication of a terminal apparatus to be connected to the control device; a main control signal transmitting unit (212) that transmits, at first transmission intervals, a main control signal that is a control signal including information for performing data communication in synchronization with the terminal apparatus; a sub-control signal transmitting unit (213) that transmits a sub-control signal notifying the terminal apparatus that the authentication unit is in a state of accepting a request for authentication; and a signal control unit (214) that controls the main control signal transmitting unit and the sub-control signal transmitting unit, wherein the signal control unit causes the sub-control signal transmitting unit to transmit the sub-control signal at second transmission intervals shorter than the first transmission intervals when it is determined that the authentication unit is in the state of accepting the request for authentication.

## Description

### [Technical Field]

The present invention relates to a control device and a terminal apparatus and, in particular, to a control device to be connected to an authenticated terminal apparatus via a network.

### [Background Art]

The use of a short-range wireless communication called wireless PAN (Personal Area Network) for interconnecting home electric appliances via a wireless network to exchange information between the appliances is becoming pervasive. For example, standards such as IEEE 802.15.4 are known.

In a typical usage scene, one control device (hereinafter sometimes also referred to as SEG) and multiple home electric appliances, which are terminal apparatuses, are provided at one home and a wireless network is built on which the multiple terminal apparatuses are connected in a star topology with the control device as the central hub.

Here, when a new home electric appliance, which is a terminal apparatus, is introduced into the home, the new terminal apparatus needs to be added to the existing network.

Thus, the home electric appliance which is the new terminal needs to be authenticated by the control device that manages the network for security purposes. However, a terminal apparatus provided in an urban area or the like can concurrently receive a plurality of radio signals transmitted from control devices at a plurality of homes. Therefore, the terminal apparatus needs to determine to which control device the terminal apparatus should request authentication (that is, which control device resides at the same home).

For that purpose, a mechanism is needed that enables a user to accomplish authentication with an operation that is as easy for use as possible and is not liable to human errors.

Therefore, a technique in Patent Literature (PTL) 1, for example, has been proposed. This technique changes the transmission intervals of a control signal called a beacon only using a control device that is in a state of accepting a request for authentication from a new terminal apparatus so that the transmission intervals becomes shorter than the transmission intervals of control signals using other control devices.

Control devices usually do not accept a request for authentication from a new terminal apparatus all the time. The control devices enter an internal state of accepting a request for authentication only in a special situation such as when a new terminal apparatus is introduced into a home. Accordingly, when a terminal apparatus receives radio signals from a plurality of control devices, the terminal apparatus can determine a control device that has shorter transmission intervals of a beacon than the other control devices as the control device to which the terminal apparatus should request for authentication.

### [Citation List]

### [Patent Literature]

[PTL 1] Japanese Unexamined Patent Application Publication No. 2006-148471

### [Summary of Invention]

### [Technical Problem]

However, the existing technique has the problem that the technique increases power consumption on the communication network because of the following reasons.

In order to prevent increase in power consumption in a terminal apparatus, which is a home electric appliance or the like, the communication function of the terminal apparatus is preferably turned off when the communication function is not necessary. Specifically, the terminal apparatus can know a time instant at which the next beacon is to be transmitted by, for example, referring to information contained in the beacon. Therefore, once the terminal apparatus has received one beacon, the terminal apparatus can enter a so-called sleep mode in which power to the communication module of the terminal apparatus is turned off until immediately before transmission of the next beacon to prevent increase in power consumption in the terminal apparatus. Accordingly, longer transmission intervals of a beacon can better prevent increase in power consumption in the terminal apparatus.

However, according to the existing technique described in PTL 1, the control device in the state of accepting a request for authentication shortens the transmission intervals of the beacon. As a result, a problem arises that even already authenticated terminal apparatuses need to be frequently powered on, thereby increasing power consumption on the entire communication network.

Therefore an object of the present invention is to provide a control device and the like that prevents power consumption on a communication network from increasing when a terminal apparatus attempts to identify the control device to which the terminal apparatus should transmit a request for authentication.

### [Solution to Problem]

A control device according to one embodiment of the present invention includes an authentication unit configured to perform authentication of a terminal apparatus to be connected to the control device via a predetermined network, a main control signal transmitting unit configured to transmit at first transmission intervals a main control signal that is a control signal including information for performing data communication in synchronization with the terminal apparatus, a sub-control signal transmitting unit configured to transmit a sub-control signal that is a control signal notifying the terminal apparatus that the authentication unit is in a state of accepting a request for the authentication, and a signal control unit configured to control the main control signal transmitting unit and the sub-control signal transmitting unit, wherein the signal control unit is configured to determine whether or not the authentication unit is in the state of accepting the request for the authentication, and cause the sub-control signal transmitting unit to transmit the sub-control signal at second transmission intervals when it is determined that the authentication unit is in the state of accepting the request for the authentication, the second transmission intervals being shorter than the first transmission intervals.

The present invention can be implemented not only as a control device and a terminal apparatus described above but also as a method for controlling a control device and a terminal apparatus including steps that implement characteristic units included in the control device and the terminal apparatus and as a computer program causing a computer to execute such characteristics steps. It would be understood that such a computer program can be distributed on a recording medium such as a CD-ROM (Compact Disc Read Only Memory) and through a transmission medium such as the Internet.

Furthermore, the present invention can also be implemented as a semiconductor large-scale integrated circuit (LSI) that implements some or all of the functions of such a control device and terminal apparatus or as a communication system including such a control device and terminal apparatus.

### [Advantageous Effects of Invention]

As has been described above, the present invention can provide a control device and the like that is capable of preventing power consumption on a communication network from increasing when a terminal apparatus attempts to identify the control device to which the terminal apparatus should transmit a request for authentication.

### [Brief Description of Drawings]

[FIG. 1] FIG. 1 is a conceptual diagram illustrating a usage scene of a communication system including a control device and terminal apparatuses according to Embodiments 1 to 3 of the present invention.
[FIG. 2] FIG. 2 is a block diagram illustrating a configuration of functional blocks of the control device according to Embodiments 1 to 3.
[FIG. 3] FIG. 3 is a block diagram illustrating a configuration of functional blocks of a terminal apparatus according to Embodiments 1 to 3.
[FIG. 4] FIG. 4 is a sequence diagram generally illustrating authentication between an unauthenticated terminal apparatus and a management apparatus according to Embodiment 1.
[FIG. 5] FIG. 5 is a conceptual diagram illustrating power consumption timings in an authenticated terminal apparatus included in a communication system in Embodiments 1 to 3.
[FIG. 6] FIG. 6 is a diagram illustrating an example of synchronization information included in a control signal in Embodiments 1 to 3.
[FIG. 7] FIG. 7 is a conceptual diagram illustrating an example of a next main control signal reception period included in the synchronization information in Embodiments 1 to 3.
[FIG. 8] FIG. 8 is a flowchart generally illustrating a process for an authentication unit according to Embodiment 1 to switch an authentication mode.
[FIG. 9] FIG. 9 is a flowchart illustrating a flow of entire processes in the control device according to Embodiment 1.
[FIG. 10] FIG. 10 is a flowchart illustrating a flow of entire processes in the control device according to Embodiment 1.
[FIG. 11] FIG. 11 is a diagram illustrating an operation image of a terminal apparatus according to Embodiment 2.
[FIG. 12] FIG. 12 is a diagram illustrating another operation image of the terminal apparatus according to Embodiment 2.
[FIG. 13] FIG. 13 is a flowchart illustrating a flow of entire processes in the terminal apparatus according to Embodiment 2.
[FIG. 14] FIG. 14 is a diagram illustrating a method for determining a search period for a searching unit according to a variation of Embodiments 1 and 2.
[FIG. 15] FIG. 15 is a first flowchart illustrating a flow of processes in a terminal apparatus according to a variation of Embodiments 1 and 2.
[FIG. 16] FIG. 16 is a second flowchart illustrating a flow of processes in a terminal apparatus according to another variation of Embodiments 1 and 2.
[FIG. 17] FIG. 17 is a diagram illustrating an example of timings at which the control device according to Embodiment 3 transmits a sub-control signal.
[FIG. 18] FIG. 18 is a flowchart illustrating a flow of processes in the control device according to Embodiment 3.
[FIG. 19] FIG. 19 is a block diagram illustrating a hardware configuration of a computer system implementing a control device and a terminal apparatus according to Embodiments 1 to 3 and variations of Embodiments 1 to 3.

### [Description of Embodiments]

A control device according to an aspect of the present invention includes: an authentication unit configured to perform authentication of a terminal apparatus to be connected to the control device via a predetermined network; a main control signal transmitting unit configured to transmit a main control signal at first transmission intervals, the main control signal being a control signal including information for performing data communication in synchronization with the terminal apparatus; a sub-control signal transmitting unit configured to transmit a sub-control signal that is a control signal notifying the terminal apparatus that the authentication unit is in a state of accepting a request for the authentication; and a signal control unit configured to control the main control signal transmitting unit and the sub-control signal transmitting unit, wherein the signal control unit is configured to determine whether or not the authentication unit is in the state of accepting the request for the authentication, and cause the sub-control signal transmitting unit to transmit the sub-control signal at second transmission intervals when it is determined that the authentication unit is in the state of accepting the request for the authentication, the second transmission intervals being shorter than the first transmission intervals.

According to this configuration, the control device transmits the sub-control signal at shorter transmission intervals than the transmission intervals of the main control signal while the control device is in the state of accepting a request for authentication. This enables authentication of only an unauthenticated terminal apparatus without activating communication modules of other, already authenticated terminal apparatuses. Consequently, activation of other terminal apparatuses irrelevant to the authentication can be prevented, thereby preventing the other terminal apparatuses from wasting power. Accordingly, power consumption on the communication network can be saved.

Furthermore, the signal control unit may be configured to prevent the sub-control signal transmitting unit from transmitting the sub-control signal when it is determined that the authentication unit is not in the state of accepting the request for the authentication.

Specifically, the signal control unit may be configured to prevent the sub-control signal transmitting unit from transmitting the sub-control signal when the authentication unit receives the request for the authentication, the request being transmitted from the terminal apparatus. According to this, when the control device receives a request for authentication transmitted from a terminal apparatus, the control device prevents transmission of the sub-control signal. That is, the terminal apparatus prevents transmission of the sub-control signal in response to identification of a terminal apparatus to be authenticated.

This can reduce the possibility of the terminal apparatus mistakenly selecting as the management apparatus a control device with which the terminal apparatus is not to be associated when a plurality of terminal apparatuses provided at neighboring homes are concurrently searching for their respective management apparatuses.

Furthermore, for example when a timer or the like is used to restrict transmission of a sub-control signal to a predetermined period, the sub-control signal is continued to be transmitted until the set timer expires even after completion of authentication with the management apparatus and thus power is wasted in the control device. By preventing transmission of the sub-control signal in response to identification of a terminal apparatus to be authenticated, waste of power in the control device can be prevented.

Furthermore, the signal control unit may be configured to cause the main control signal transmitting unit to transmit only the main control signal after preventing the sub-control signal transmitting unit from transmitting the sub-control signal, when it is determined that the authentication unit is not in the state of accepting the request for the authentication.

According to this, when it is determined that a request for authentication from the terminal apparatus is no longer transmitted, the signal control unit prevents transmission of the sub-control signal and then allows only the main control single to be transmitted. This can prevent the control device from mistakenly determining that an already authenticated terminal apparatus is still in the process of authentication. Consequently, data communication with the terminal apparatus can be properly performed.

Furthermore, the main control signal may include information on a period from transmission of the main control signal to transmission of a next main control signal, and the sub-control signal may include information on a period from transmission of the sub-control signal to transmission of a next main control signal.

This enables the terminal apparatus to check information about time included in the received control signal to determine whether or not the received control signal include the sub-control signal.

Furthermore, the signal control unit may be configured to control the sub-control signal transmitting unit so that the sub-control signal transmitting unit transmits the sub-control signal at intervals according to a pattern in which the sub-control signal has a predetermined periodicity.

This enables the terminal apparatus to determine whether or not the terminal apparatus has received the sub-control signal even when the control signal does not include information about time.

Furthermore, the predetermined network may be a wireless communication network.

Furthermore, the authentication unit may be configured to start accepting the request for the authentication when obtaining an input from a user.

A terminal apparatus according to another aspect of the present invention includes: a receiving unit configured to receive a control signal transmitted by a control device to be connected to the terminal apparatus via a predetermined wireless network; a determining unit configured to determine whether or not the control signal includes a sub-control signal that is a control signal indicating that the control device that transmits the control signal is in a state of accepting a request for an authentication for authenticating a terminal apparatus that performs data communication; a selecting unit configured to select the control device that has transmitted the sub-control signal as a management apparatus that is a control device to which the authentication is requested, when the determining unit determines that the control signal includes the sub-control signal; and a transmitting unit configured to transmit, to the management apparatus, the request for the authentication.

According to this configuration, the control device transmits the sub-control signal at shorter transmission intervals than the transmission intervals of the main control signal while the control device is in the state of accepting a request for authentication. Accordingly, authenticated terminal apparatuses do not need to receive the sub-control signal and an unauthenticated terminal apparatus can select a correct control device as the management apparatus.

Furthermore, the selecting unit may be configured to select, as the management apparatus, the control device that has transmitted the control signal determined by the determining unit for a first time as including the sub-control signal.

According to this, the terminal apparatus determines the control device transmitting the sub-control signal as being the management apparatus even when there remains a frequency at which a control signal has not been searched for and terminates the search for the control signal. Accordingly, the time required for the search for the control device can be reduced.

Furthermore, the control signal may be a control signal transmitted by the control device, and may include synchronization information indicating a period until a main control signal is next transmitted, the main control signal being a control signal including information for performing data communication in synchronization with a terminal apparatus, and the determining unit may be configured to determine that two consecutive control signals include the sub-control signal when the receiving unit receives a subsequent control signal that is one of the two consecutive control signals, in a period from receipt of a prior control signal to a time indicated by the synchronization information included in the subsequent control signal, the prior control signal being the other of the two consecutive signals.

When there is not a control signal other than the main control signal, the terminal apparatus receives no control signal in a period between receipt of a prior control signal by the terminal apparatus and the time of transmission of a next main control signal. Accordingly, when the terminal apparatus receives a subsequent control signal before the elapse of the time indicated by the synchronization information, it can be determined that at least one of the prior signal and the subsequent signal is the sub-control signal.

Furthermore, the determining unit may be configured to pre-store transmission intervals of a main control signal that is a control signal including information for the control device performing data communication in synchronization with a terminal apparatus, and determine that a plurality of control signals including the control signal include the sub-control signal when reception intervals of the control signals are shorter than the transmission intervals of the main control signal, the control signals being received by the receiving unit.

Furthermore, the determining unit may be configured to obtain the number of control signals which are received by the receiving unit for a predetermined period, and determine that the control signals include the sub-control signal when the number of control signals is larger than or equal to a predetermined threshold.

Furthermore, the control signal may include synchronization information indicating a period until a main control signal is next transmitted, the main control signal including information for the control device performing data communication in synchronization with a terminal apparatus, and the determining unit may be configured to determine that a subsequent control signal is the sub-control signal when a period indicated by synchronization information included in the subsequent control signal is shorter than a period indicated by synchronization information included in a prior control signal, the subsequent control signal and the prior control signal being two consecutive signals.

Furthermore, the terminal apparatus may further include a searching unit configured to set predetermined frequencies of carrier waves as frequencies of the control signal received by the receiving unit, and cause the receiving unit to receive the control signal only for a predetermined search period at each of the frequencies, wherein the searching unit may be configured to pre-store transmission intervals of the sub-control signal, and set the predetermined search period based on the transmission intervals of the sub-control signal.

Embodiments of the present invention will be described below in detail with reference to drawings. Note that the embodiments described below illustrate preferable exemplary embodiments of the present invention. Numeric values, shapes, components, arrangements and connection topology of the components, steps and the order of the steps given in the embodiments described below are illustrative only and not intended to limit the present invention. The present invention is limited only by the claims. Therefore, among the components in the following embodiments, components that are not set forth in any of the independent claims are not necessarily required to achieve the object of the present invention but will be described as components constituting more preferable embodiments.

### [Embodiment 1]

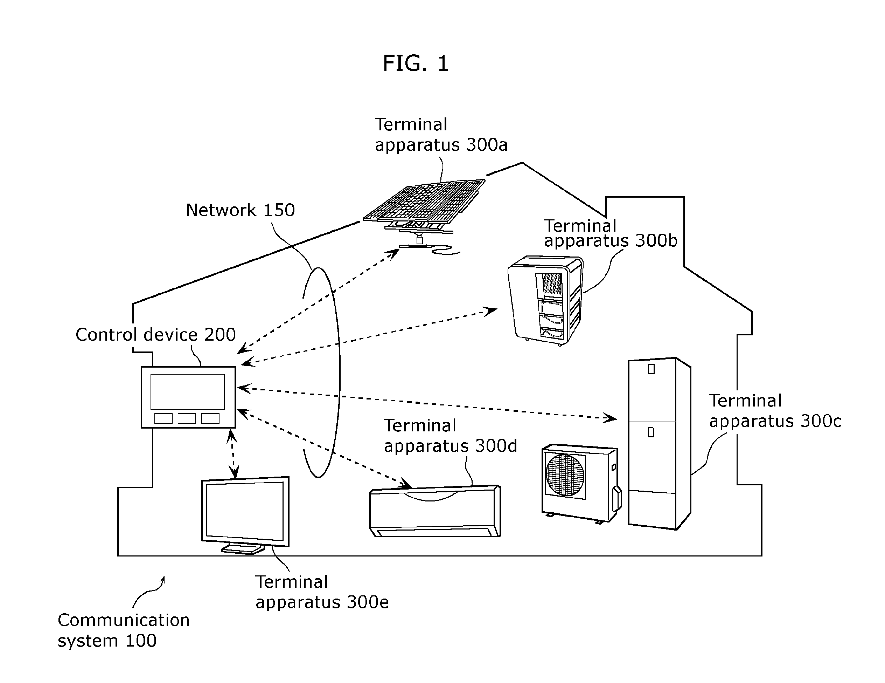

FIG. 1 is a conceptual diagram illustrating a usage scene of a communication system 100 including a control device and terminal apparatuses according to Embodiment 1 of the present invention.

As illustrated in FIG. 1, the communication system 100 includes a control device 200, and terminal apparatuses 300a to 300e. Hereinafter the reference sign 300 is used to collectively refer to terminal apparatuses.

The control device 200 according to the present embodiment is connected to each of a plurality of the terminal apparatuses 300 via a network 150. In the present embodiment, a wireless PAN conforming to IEEE 802.15.4 is used as the network 150. Technology for the network 150 is not limited to this; any communication technology can be used. Assuming an environment where a corresponding control device and terminal apparatuses are located near to each other in a certain range such as a home or an office, short-range wireless communication over distances up to several tens of meters or so is preferably used for the network 150.

The control device 200 obtains information about power consumed or produced by the terminal apparatus 300, for example, through data communication with the terminal apparatus 300 and outputs the information to a user.

The control device 200 transmits a control signal to all of the terminal apparatuses 300 at a time separately from the data communication. The control signal is called a beacon in some standards, including IEEE 802.15.4.

The control device 200 transmits two types of control signals, a main control signal and a sub-control signal, at intervals independent from each other.

The main control signal includes information for each of the terminal apparatuses 300 to perform data communication with the control device 200 in synchronization with the control device 200. The terminal apparatus 300 can turn off the communication function of itself during periods of time except a period of time specified by the main control signal to save power consumption. The main control signal will be detailed later.

The sub-control signal is a control signal for notifying the terminal apparatuses 300 that the control device 200 is in a state of accepting a request for authentication from a new terminal apparatus 300. Details will be described later.

In operation except authentication, the terminal apparatuses 300 turn on their communication function at a timing specified by the main control signal, performs communication with the control device 200, and then turn off the communication function. The terminal apparatuses 300 in the present embodiment are home electric appliances and the like provided at one home. For example, the terminal apparatus 300a is a home solar power system; the terminal apparatus 300b is a home energy storage system; the terminal apparatus 300c is hot-water supply equipment such as a cogeneration or heat-pump water heater; the terminal apparatus 300d is so-called white goods such as an air conditioner; and the terminal apparatus 300e is AV (Audio Visual) equipment such as a television set.

Note that the terminal apparatuses 300 are not limited to home electric appliances provided at home. For example, the terminal apparatuses 300 may be office equipment at an office or production equipment at a factory.

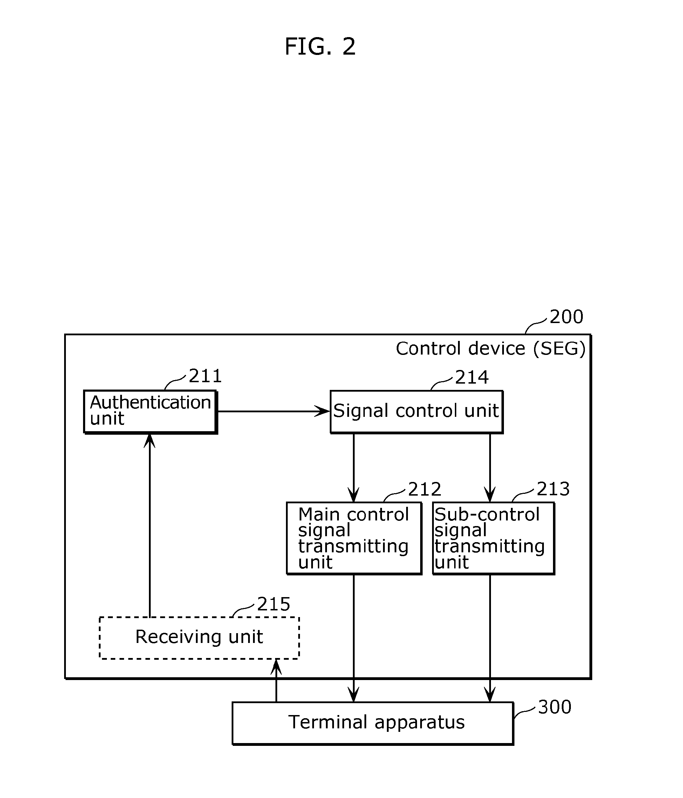

FIG. 2 is a block diagram illustrating a configuration of functional blocks of the control device 200 according to the present embodiment. As illustrated in FIG. 2, the control device 200 includes an authentication unit 211, a main control signal transmitting unit 212, a sub-control signal transmitting unit 213, a signal control unit 214, and a receiving unit 215.

The authentication unit 211 performs authentication of the terminal apparatus 300 to be connected via the network 150, which is a predetermined network. The terminal apparatus 300 needs to undergo authentication by the control device 200 before the terminal apparatus 300 can perform communication with the control device 200 via the network 150. This is because the control device 200 can prevent itself from obtaining information transmitted from the terminal apparatus 300 that belongs to another, neighboring home (an unauthenticated terminal apparatus 300) by communicating only with an authenticated terminal apparatus 300. Accordingly, when the unauthenticated terminal apparatus 300 is to be added to the network 150, the unauthenticated terminal apparatus 300 needs to be authenticated by the control device 200. Referring to FIG. 1, a newly-purchased terminal apparatus 300e, for example, needs to be authenticated by the control device 200. The authentication unit 211 performs the authentication.

Here, given a typical usage situation, the authentication unit 211 does not so frequently authenticate a new terminal apparatus 300. Therefore, the authentication unit 211 according to the present embodiment enters a mode (an internal state) for accepting a request for authentication from a new terminal apparatus 300 only in a specific situation such as at a time when a user issues an instruction by performing an explicit operation; the rest of the time, the authentication unit 211 does not accept a request for authentication from the terminal apparatus 300.

The main control signal transmitting unit 212 transmits a main control signal which is a control signal including information for performing data communication in synchronization with the terminal apparatuses 300, to all of the terminal apparatuses 300 at first transmission intervals.

Usually, the main control signal is transmitted to all of the terminal apparatuses 300 at regular intervals (that is, the same time intervals). Note that the main control signal is transmitted one or more times in total. As will be described later, the main control signal includes information indicating the first transmission intervals (for example, a time instant at which the main control signal is to be transmitted next time or a period of time that elapses before the time instant) in a packet. Accordingly, when the main control signal transmitting unit 212 changes the first transmission intervals, the main control signal transmitting unit 212 changes the information included in the main control signal that indicates a next time instant at which the main control signal is transmitted next time so that data communication can be performed in synchronization with all of the terminal apparatuses 300 constantly before and after the change.

The sub-control signal transmitting unit 213 transmits a sub-control signal for notifying the terminal apparatus 300 that the authentication unit 211 is in a state of accepting a request for authentication.

As has been described above, the terminal apparatus 300 needs to undergo authentication by the control device 200 before the terminal apparatus 300 can perform communication with the control device 200 via the network 150. The authentication unit 211 enters the special mode (internal state) for accepting a request for authentication from a new terminal apparatus 300 only in a specific situation and, the rest of the time, the authentication unit 211 does not accept a request for authentication from the terminal apparatus 300.

The sub-control signal transmitting unit 213 therefore transmits the sub-control signal to all of the terminal apparatuses 300 when the authentication unit 211 is in the state of accepting a request for authentication from the terminal apparatus 300. Specifically, the sub-control signal transmitting unit 213 transmits the sub-control signal to all of the terminal apparatuses 300 on the network 150 (regardless of whether the terminal apparatuses are authenticated or not).

Accordingly, the unauthenticated terminal apparatus 300 can determine the control device 200 that is transmitting the sub-control signal as being the control device 200 to which the terminal apparatus 300 is to be connected via the network 150.

Note that the control device 200 to which the terminal apparatus 300 is to be connected is hereinafter referred to as a "management apparatus" for the terminal apparatus 300.

The signal control unit 214 controls the main control signal transmitting unit 212 and the sub-control signal transmitting unit 213. Specifically, the signal control unit 214 determines whether or not the authentication unit 211 is in the state of accepting a request for authentication. When the signal control unit 214 determines that the authentication unit 211 is in the state of accepting a request for authentication, the signal control unit 214 causes the sub-control signal transmitting unit 213 to transmit the sub-control signal at second transmission intervals shorter than the first transmission intervals.

On the other hand, an already authenticated terminal apparatus 300 (that is, the terminal apparatus 300 that does not need to receive the sub-control signal) repeatedly turns on and off its communication function at the first transmission intervals. This can save power consumption in the entire terminal apparatus 300. This will be described later in further detail.

The receiving unit 215 is a communication interface for receiving data signals transmitted from the terminal apparatuses 300 via the network 150.

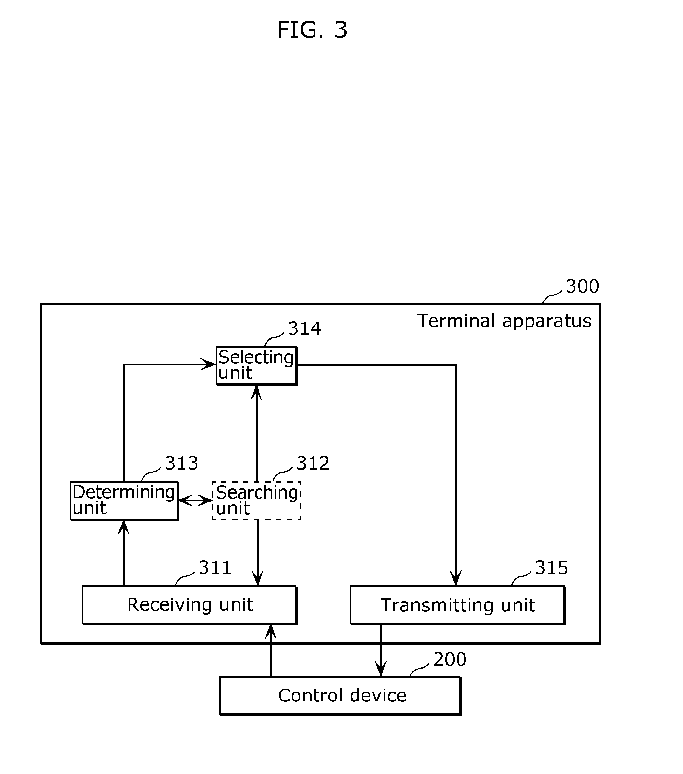

FIG. 3 is a block diagram illustrating a configuration of functional blocks of the terminal apparatus 300 according to the present embodiment. As illustrated in FIG. 3, the terminal apparatus 300 according to the present embodiment includes a receiving unit 311, a searching unit 312, a determining unit 313, a selecting unit 314, and a transmitting unit 315.

The receiving unit 311 is a communication interface that receives a control signal which is transmitted from the control device 200 connected via the network 150 and includes at least one of the main control signal and the sub-control signal.

The searching unit 312 sets predetermined frequencies of carrier waves as frequencies of the control signal received by the receiving unit 311, and cause the receiving unit 311 to receive the control signal only for a predetermined search period at each of the frequencies.

There are a plurality of frequencies of carrier wave to choose from that can be used for wireless communication between the terminal apparatuses 300 and the control device 200 on the network 150. The frequency is unique to each control device 200 and therefore different control devices 200 have different frequencies of carrier waves. However, the terminal apparatus 300 cannot know the frequency of the carrier wave to be used by the control device 200 acting as the management apparatus for the terminal apparatus 300 (that is, the frequency of the carrier wave to be used for transmitting the main control signal and the sub-control signal) in advance. Therefore, the terminal apparatus 300 controls the receiving unit 311 so as to exhaustively try all available frequencies of carrier waves in principle in order to receive the control signal from the control device 200. The processes performed by the searching unit 312 will be described later in detail with reference to a flowchart.

The determining unit 313 determines whether or not the control signal received by the receiving unit 311 includes the sub-control signal.

Since the terminal apparatus 300 does not know an address of the control device 200 acting as the managing apparatus and the frequency of the carrier wave to use, the terminal apparatus 300 identifies the control device 200 acting as the managing apparatus by the sub-control signal as has been described above. Specifically, the receiving unit 311 attempts to receive the control signal at a certain frequency of a carrier wave. When the determining unit 313 determines that the control signal received includes a sub-control signal, the terminal apparatus 300 can determine that the control device 200 transmitting the control signal is likely to be the management apparatus.

There can be various methods for the determining unit 313 to use for determining whether or not the control signal includes the sub-control signal.

For example, the control signal may include synchronization information which is information about a period of time from transmission of the control signal to transmission of the next main control signal and the determining unit 313 may determine that two consecutive control signals include the sub-control signal when the terminal apparatus 300 has received the subsequent control signal that is one of the two consecutive signals in a period of time from receipt of the prior control signal to a time indicated by the synchronization information included in the prior control signal.

When there is not a control signal other than the main control signal, the terminal apparatus 300 receives no control signal in a period between receipt of a prior control signal by the terminal apparatus and the time of transmission of a next main control signal. Accordingly, when the terminal apparatus 300 receives a subsequent control signal before the elapse of the time indicated by the synchronization information, it can be determined that at least one of the prior signal and the subsequent signal is the sub-control signal.

The selecting unit 314 selects the management apparatus from among control devices 200 that has transmitted the sub-control signal when it is determined that the control signal includes the sub-control signal.

Specifically, when the determining unit 313 determines that there is one control device 200 transmitting the control signal including the sub-control signal, the selecting unit 314 selects the control device 200 as the management apparatus.

When the determining unit 313 determines that (A) there are a plurality of sub-control signals included in control signals transmitted from different control devices 200 at one frequency of a carrier wave or that (B) there is a sub-control signal included in control signals at each of a plurality of carrier frequencies, the selecting unit 314 selects one control device 200 from among the control devices 200 transmitting the control signals including the sub-control signals as the management apparatus according to a predetermined rule.

More specifically, the selecting unit 314 may select, for example, the control device 200 that has transmitted a control signal exhibiting the highest received signal strength, among the control signals including the sub-control signals and received by the selecting unit 314, as the management apparatus.

The transmitting unit 315 transmits a request for authentication to the control device 200 selected by the selecting unit 314 as the management apparatus.

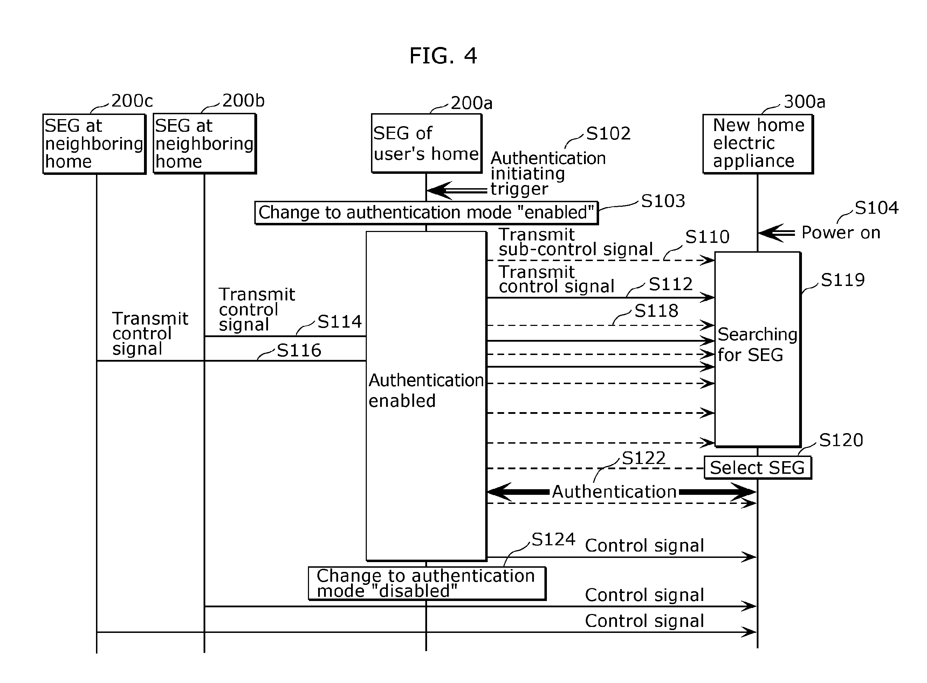

FIG. 4 is a sequence diagram generally illustrating processes for the terminal apparatus 300a that is an unauthenticated terminal apparatus (for example, a new home electric appliance) at a home, for example, and an SEG 200a that is to act as the management apparatus at the home to accomplish authentication.

It is assumed here that the terminal apparatus 300a is in a state of receiving control signals transmitted from SEGs 200b and 200c at neighboring homes, in addition to a control signal from the SEG 200a at the home.

First, in order to authenticate the terminal apparatus 300a to the SEG 200a at the home, a user operates an authentication initiating button, for example, on the SEG 200a to issue an authentication initiating trigger to the SEG 200a at the home (S102).

As a result, the SEG 200a at the home changes an authentication mode to "enabled" (S103).

In this state, when the terminal apparatus 300a is powered on for the first time (S104), the terminal apparatus 300a searches for an SEG to be selected as the management apparatus at every frequency at which a carrier wave can be used (S119). Here, the terminal apparatus 300a receives main control signals from all of the SEG 200a at the home, the SEG 200b at a neighboring home, and an SEG 200c at the other neighboring home (S112, S114, S116). On the other hand, the terminal apparatus 300a receives a sub-control signal only from the SEG 200a at the user's home (S110, S118).

Accordingly, the selecting unit 341 of the terminal apparatus 300a selects the SEG 200a at the home as the management apparatus (S120).

The terminal apparatus 300a then transmits a request for authentication to the SEG 200a at the home and performs authentication with the SEG 200a at the home (S122).

After completion of the authentication, the SEG 200a at the home changes the "authentication mode" to "disabled" (S124).

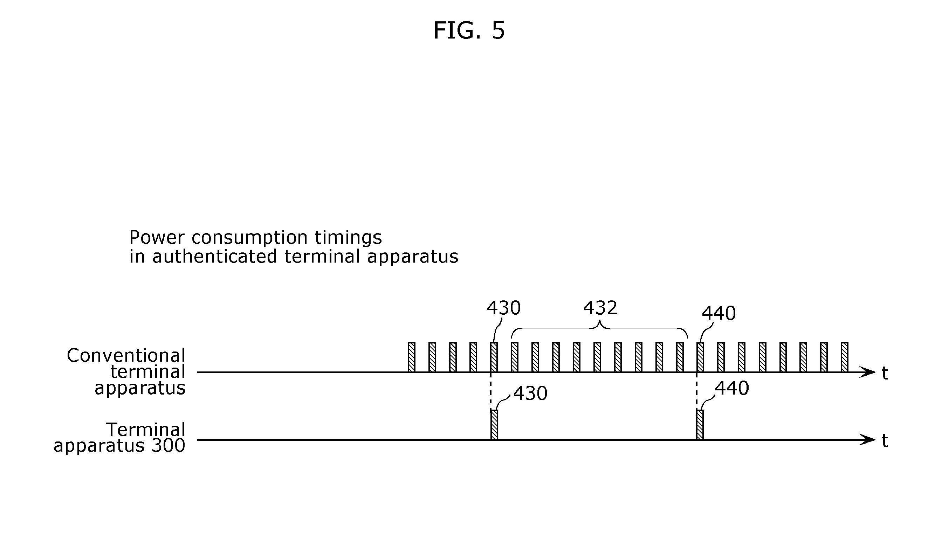

Advantageous effects of the communication system 100 configured as described above according to the present embodiment will be described next with reference to FIG. 5.

FIG. 5 is a conceptual diagram illustrating power consumption timings in an authenticated terminal apparatus 300 included in the communication system 100 according to the present embodiment. Horizontal axes in FIG. 5 represent time. Bars on the horizontal axes represent (1) timings at which a conventional-art terminal apparatus authenticated by the control device 200 consumes power and (2) timings at which each of the terminal apparatuses 300 according to the present embodiment authenticated by the control device 200 consumes power.

As illustrated in FIG. 5, the terminal apparatus according to the conventional art consumes power at transmission timings of every main control signal 430 transmitted from the terminal apparatus 300 for receiving the control signals.

On the other hand, the terminal apparatus 300 according to the present embodiment can turn off its communication function at timings at which sub-control signals 432 are transmitted and thereby can save power consumption for receiving the sub-control signals 432.

As has been described above, the communication system 100 according to the present embodiment can save power consumption in the terminal apparatus 300 already authenticated by the control device 200.

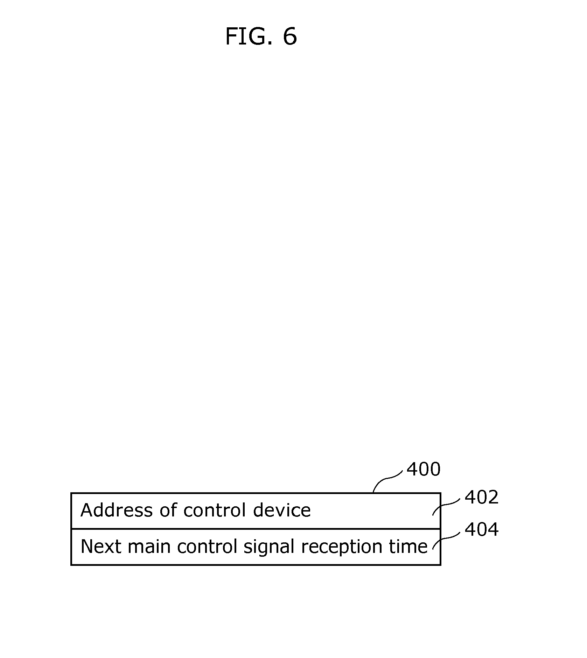

FIG. 6 is a diagram illustrating an example of synchronization information included in the control signal in the present embodiment.

As illustrated in FIG. 6, the synchronization information 400 includes a control device address 402 and a next main control signal reception time 404.

The control device address 402 is an address unique to the control device 200 transmitting the synchronization information and is information that uniquely identifies the control device 200. For example, the main control signal transmitting unit 212 and the sub-control signal transmitting unit 213 write the control device address 402 of the control device in the synchronization information included in the control signal to be transmitted.

The next main control signal reception time 404 is information about a period of time from transmission of the control signal including the synchronization information to transmission of a next main control signal. The next main control signal reception time 404 may be a time instant at which a next main control signal is to be transmitted or may be time that will elapse until transmission of a next main control signal.

That is, the main control signal includes information about the time that elapses between transmission of the main control signal and transmission of the next main control signal, and the sub-control signal includes information about the time that elapses between transmission of the sub-control signal and transmission of the next main control signal.

The synchronization information 400 included in the main control signal always includes the next main control signal reception time 404. The synchronization information 400 included in the sub-control signal does not necessarily need include the next main control signal reception time 404.

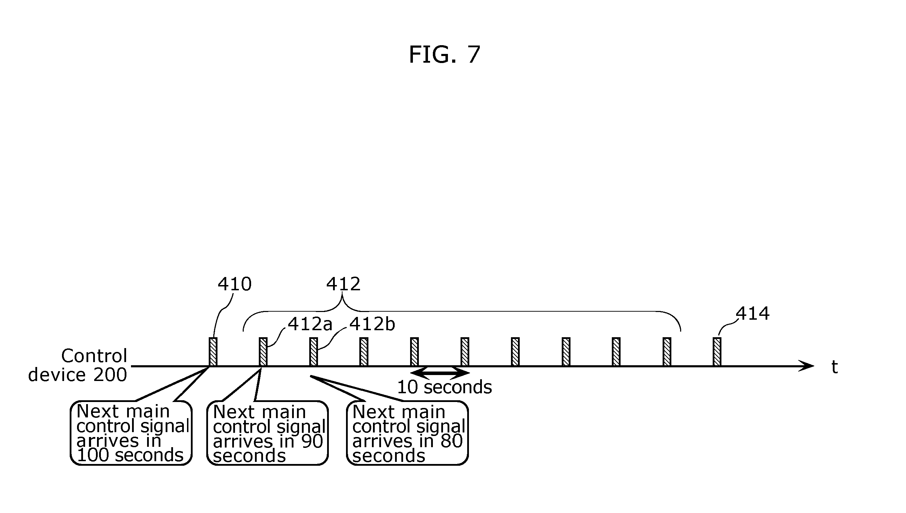

FIG. 7 is a conceptual diagram illustrating an example of the next main control signal reception time 404 included in the synchronization information 400.

When a period of the main control signal is 100 seconds, the next main control signal reception time 404 included in the main control signal 410 is "in 100 seconds".

On the other hand, the main control signal reception time 404 included in a sub-control signal 412a transmitted from the control device 200 subsequently to the main control signal 410 is "in 90 seconds". The next main control signal reception time 404 included in a subsequent sub-control signal 412b is "in 80 seconds".

In this way, the next main control signal reception time 404 included in the sub-control signal 412 is decremented by 10 seconds, for example, until a next main control signal 414 is transmitted.

An overview of the control device 200 and terminal apparatuses 300 included in the communication system 100 according to the present embodiment has been provided so far.

A flow of processes concerning the control device 200 and terminal apparatuses 300 according to the present embodiment will be described next in further detail with reference to a flowchart.

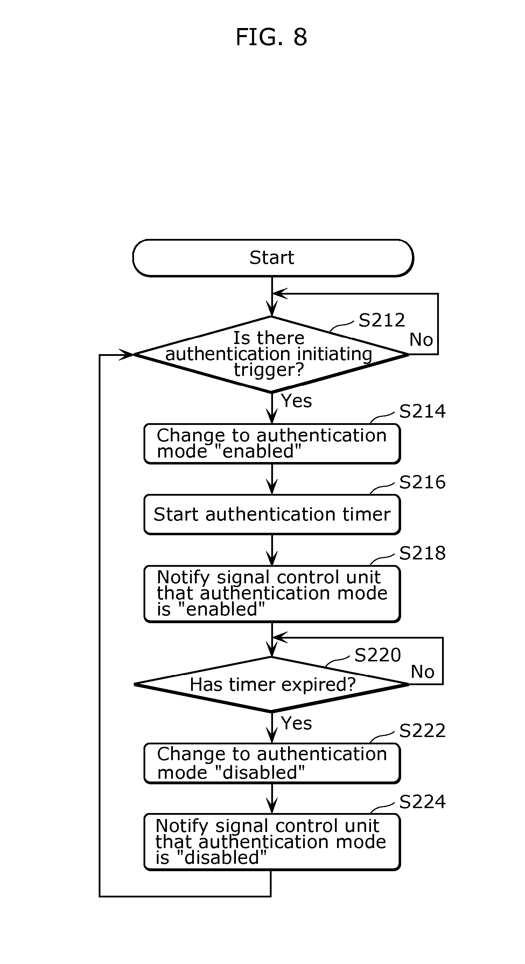

FIG. 8 is a flowchart generally illustrating processes for the authentication unit 211 of the control device 200 according to the present embodiment to switch between authentication modes. Here, there are an authentication mode "enabled" (that is, a mode in which the control device 200 accepts a request for authentication from a new terminal apparatus 300) and an authentication mode "disabled" (a mode in which the control device 200 does not accept a request for authentication).

First, the authentication unit 211 determines whether there is an authentication initiating trigger, such as an explicit operation performed by a user, which is a trigger requesting the control device 200 to accept a request for authentication (S212). When the authentication unit 211 determines that there is not the authentication initiating trigger (No at S212), the authentication unit 211 makes determination again at a next determination timing (S212). On the other hand, when the authentication unit 211 determines that there is the authentication initiating trigger (Yes at S212), the authentication unit 211 changes the authentication mode to "enabled" (S214).

The authentication unit 211 then starts an authentication timer in order to limit a period of time in which a request for authentication is accepted (S216). The authentication unit 211 then notifies the signal control unit 214 that the authentication mode is enabled (S218).

Then the authentication unit 211 is in a state of accepting a request for authentication until the authentication timer expires (that is, until a predetermined period of time elapses after the start of the authentication timer at step S216) (No at S220). Upon expiration of the authentication timer (Yes at S220), the authentication unit 211 changes the authentication mode to "disabled" (S222). The authentication unit 211 then notifies the signal control unit 214 that the authentication mode is disabled (S224), and the processes return to step S212.

The sub-control signal is transmitted from the control device 200 only when the authentication mode is "enabled".

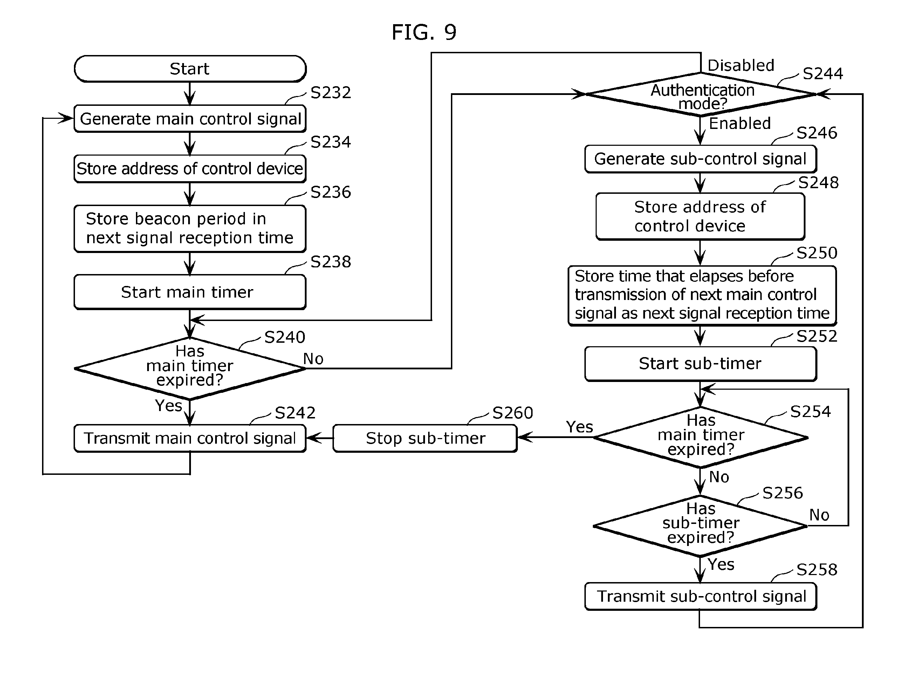

FIG. 9 is a flowchart illustrating a flow of entire processes in the control device 200 according to the present embodiment.

First, the main control signal transmitting unit 212 generates a packet to be transmitted as a main control signal to the terminal apparatus 300 (S232). In doing so, the main control signal transmitting unit 212 stores an address that is an identifier uniquely identifying the control device 200 among a plurality of control devices 200 in the packet (S234). The main control signal transmitting unit 212 also stores a beacon period, which is a time interval in which the control device 200 transmits a main control signal in the packet as the next main signal reception time 404 (S236).

The main control signal transmitting unit 212 then starts a main timer which is a timer used for determining whether or not the beacon period specified as the next main control signal reception time 404 has elapsed (S238).

Then, when the main timer has not yet expired (No at S240), the signal control unit 214 determines whether the authentication mode of the authentication unit 211 is "disabled" or "enabled" (S244).

Here, when the authentication mode is disabled ("disabled" at S244), the signal control unit 214 performs step 240 again. On the other hand, when the authentication mode is enabled ("enabled" at S244), the signal control unit 214 causes the sub-control signal transmitting unit 213 to generate a packet to be transmitted as a sub-control signal (S246). The sub-control signal transmitting unit 213 stores an address which is an identifier for uniquely identifying the control device 200 from among other control devices 200 in the packet (S248). The sub-control signal transmitting unit 213 also stores time that elapses before transmission of a next main control signal in the packet as the next main control signal reception time 404 (S250).

The sub-control signal transmitting unit 213 then starts a sub-timer which is a timer set for waiting until a next time instant at which the sub-control signal is to be transmitted (S252).

Then, the signal control unit 214 monitors expiration of any of the main timer and the sub-timer (No at S254 and S256). When the sub-timer has expired (Yes at S256), the signal control unit 214 causes the sub-control signal transmitting unit 213 to transmit the sub-control signal (S258), and the processes return to step S244.

When the main timer has expired (Yes at S254), the signal control unit 214 stops the sub-timer (S260) and causes the main control signal transmitting unit 212 to transmit the main control signal (S242).

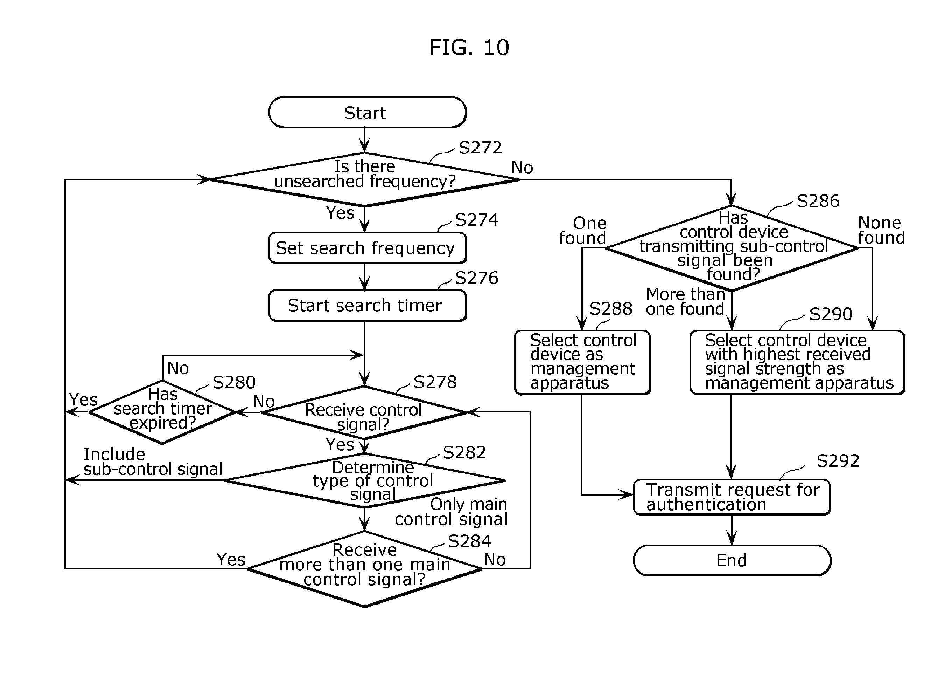

Each of the terminal apparatuses 300 according to the present embodiment will be described next with reference to FIG. 10.

FIG. 10 is a flowchart illustrating a flow of entire processes of the terminal apparatus 300 according to the present embodiment.

First, the searching unit 312 determines whether or not there is an unsearched frequency on a list of frequencies predetermined as frequencies of carrier waves used for transmission of a control signal (S272). Note that "search" here means a reception process performed by the terminal apparatus 300 for a predetermined period of time, including steps S274 through S284, which will be described later.

When the searching unit 312 determines that there is an unsearched frequency or frequencies (Yes at S272), the searching unit 312 identifies one of the unsearched frequencies as a frequency to be searched for and sets a radio frequency to be received by the receiving unit 311 to the identified search frequency (S274). Furthermore, the searching unit 312 starts a search timer which is a timer for measuring a limited time for trying one frequency to determine whether or not the receiving unit 311 can receive a sub-control signal at that frequency (S276).

Then the determining unit 313 determines whether or not the receiving unit 311 has received a control signal at the search frequency (S278). Here, when the determining unit 313 determines that the receiving unit 311 has received a control signal (No at S278), the processes return to step S278 unless the search timer has not expired (No at S280). When the search timer has expired (Yes at

S280), the processes return to step S272.

When the determining unit 313 determines that the receiving unit 311 has received a control signal (Yes at S278), the determining unit 313 determines the type of the received control signal (S282). When the determining unit 313 determines as a result that the control signal includes a sub-control signal ("include sub-control signal" at S282), the processes return to step S272. When the determining unit 313 determines that the received control signal is only a main control signal ("only main control signal" at S282), the determining unit 313 then determines whether or not the receiving unit 311 has received more than one main control signal at the current frequency (S284). Here, when the determining unit 313 determines that the receiving unit 311 has received only one main control signal (No at S284), the processes return to step S278. When the determining unit 313 determines that the receiving unit 311 has received more than one main control signal (Yes at S284), the processes return to step S272.

Note that when two or more consecutive control signals are used to determine whether or not the control signals include a sub-control signal, there is a possibility that the determining unit 313 cannot made determination from one received control signal alone as to whether or not there is a sub-control signal. When the determination cannot be made at S282, the determining unit 313 may determine that there is "only a main control signal" and waits for arrival of a next control signal.

When the searching unit 312 determines at step S272 that there is not an unsearched frequency (No at S272), the selecting unit 314 performs a process for selecting a management apparatus (S286).

Specifically, the selecting unit 314 determines how many control devices 200 transmitting a sub-control signal has been found. When one control device 200 has been found, the selecting unit 314 selects the found control device 200 as the management apparatus (S288); when more than one control device 200 transmitting a sub-control signal has been found, or when no control device 200 has been found ("more than one found"/"none found" at S286), the selecting unit 314 selects the control device 200 transmitting the control signal that has the highest received signal strength among the received control signals as the management apparatus (S290).

Then the transmitting unit 315 transmits a request for authentication to the management apparatus (S292).

Configurations of the control device 200 and the terminal apparatuses 300 of the communication system 100 according to Embodiment 1 have been described so far.

According to the present embodiment, the control device 200 transmits the sub-control signal at shorter transmission intervals than the transmission intervals of the main control signal while the control device 200 is in the state of accepting a request for authentication.

This enables authentication of the unauthenticated terminal apparatus 300 without activating the module relating to the communication function of already authenticated terminal apparatuses 300. Consequently, waste of power by activation of other terminal apparatuses 300 irrelevant to authentication can be prevented.

Furthermore, since the authentication of the terminal apparatus 300 is performed without activating the module relating to the communication function of already authenticated terminal apparatuses 300, the possibility of erroneous authentication can be minimized.

Moreover, the unauthenticated terminal apparatus 300 can receive the sub-control signal which is different from the main control signal to accurately identify the control device 200 transmitting the sub-control as the management apparatus.

Furthermore, even when the control device 200 enters the state of accepting a request for authentication immediately after transmission of a main control signal, the terminal apparatus 300 can receive a sub-control signal transmitted before receiving a next main control signal without having to wait for the next main control signal. Accordingly, the terminal apparatus 300 can identify the control device 200 that acts as the management apparatus without waiting until the time instant at which the next main control signal is to be transmitted. Consequently, the time it takes for the terminal apparatus 300 to find the management apparatus can be reduced.

In this way, the control device 200 and the terminal apparatus 300 according to the present embodiment enable quick and accurate identification of the control device 200 by the terminal apparatus 300 while preventing increase in power consumption in other, already authenticated terminal apparatuses during the authentication of the terminal apparatus 300 by the control device 200.

### (Embodiment 2)

A terminal apparatus 300 of a communication system 100 according to Embodiment 2 of the present invention will be described next.

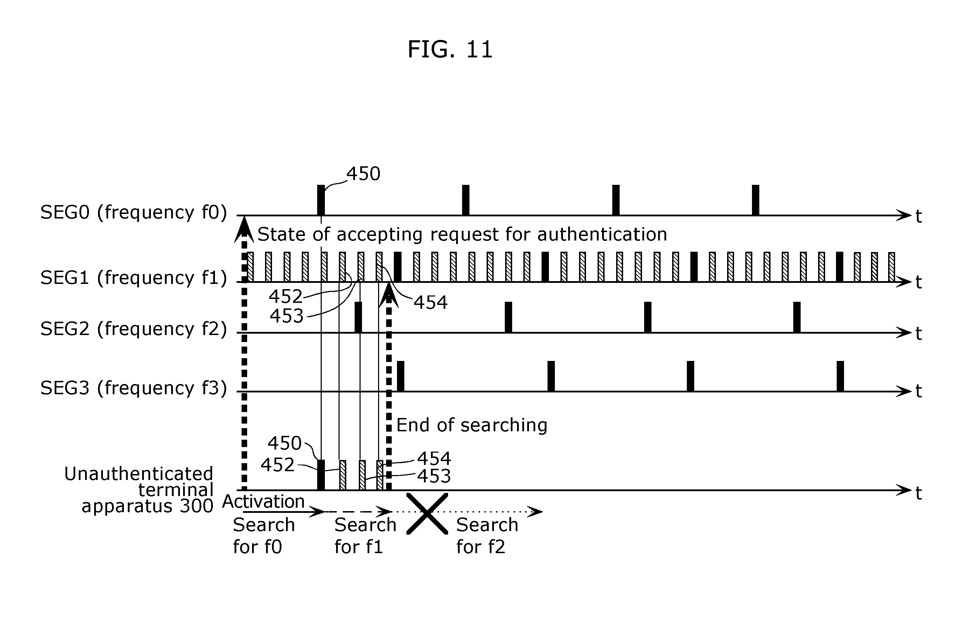

FIG. 11 is a conceptual diagram illustrating an operation of the terminal apparatus 300 according to the present embodiment. FIG. 11 illustrates timings at which four control devices 200, SEG0 to SEG3, transmit control signals as bars on time axes t. The frequency of a carrier wave of SEG0 is f0. Likewise, the frequency of SEG1 is f1, the frequency of SEG2 is f2, and the frequency of SEG3 is F3. It is assumed here that only SEG1 out of the four control devices 200 is in a state of accepting a request for authentication (that is, the authentication unit 211 is in an authentication mode "enabled").

Here, the unauthenticated terminal apparatus 300 starts searching for frequencies f0, f1, etc in this order after being activated. In searching at frequency f0, the terminal apparatus 300 receives a main control signal 450 transmitted from SEG0. In searching at next frequency f1, the terminal apparatus 300 receives sub-control signals 452 to 454 transmitted from SEG1.

Here, in the terminal apparatus 300 according to Embodiment 1, the searching unit 312 continues searching at every frequency until there is no more unsearched frequencies (step S272 of FIG. 10).

In contrast, the searching unit 312 of the terminal apparatus 300 according to the present embodiment ends searching when reception of a sub-control signal is determined. Specifically, the terminal apparatus 300 does not search for frequency f2 and the rest.

That is, the searching unit 312 according to the present embodiment selects, as a management apparatus, a control device 200 that has transmitted the control signal determined for the first time as including the sub-control signal.

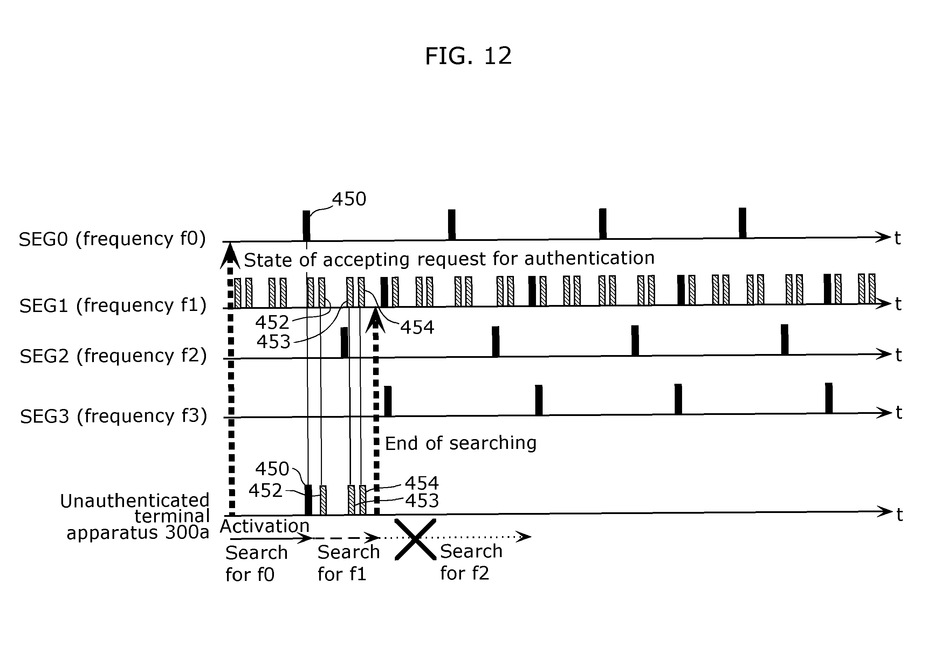

According to this, the terminal apparatus 300 determines that the control device 200 that has transmitted the sub-control signal as being the management apparatus and ends the search for a control signal even when there remains a frequency at which a control signal has not been searched for. Accordingly, the time required for the search for the control device 200 can be reduced. Note that the control device 200 may transmit the sub-control signal at further patterned transmission intervals. For example, the control device 200 may transmit a sub-control signal having a pattern made up of two consecutive sub-control signals, like SEG1 illustrated in FIG. 12, at shorter transmission intervals than the transmission intervals of the main control signal.

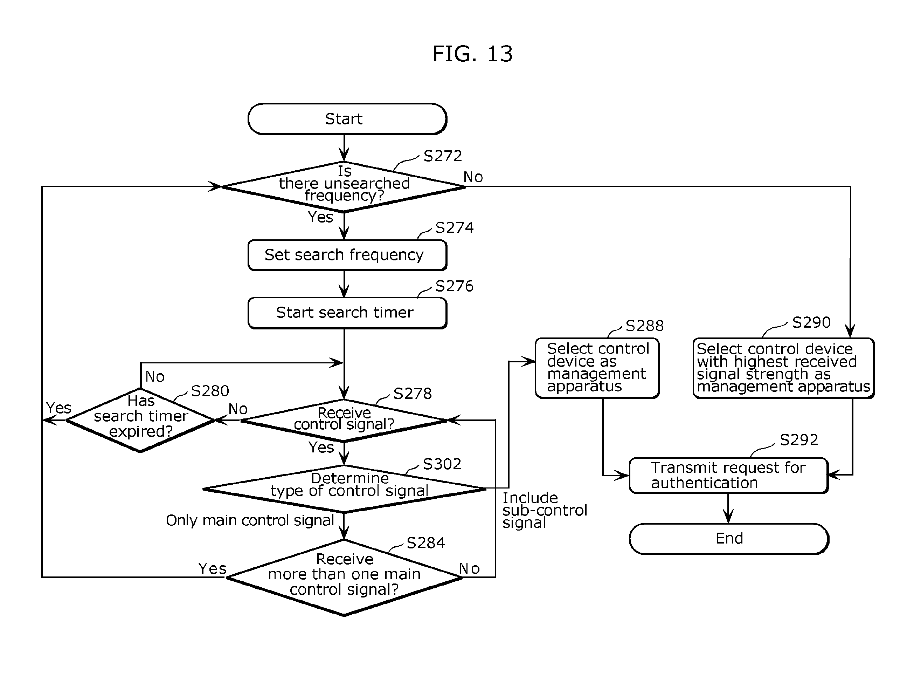

FIG. 13 is a flowchart illustrating a flow of entire processes in the terminal apparatus 300 according to the present embodiment. The same operations as those in the terminal apparatus 300 according to Embodiment 1 illustrated in FIG. 10 are given the same reference signs, and detailed description of those operations will be omitted.

The terminal apparatus 300 according to the present embodiment receives a control signal (Yes at S278), and then determines the type of the control signal (S302).

When the determining unit 313 determines that the received control signal includes a sub-control signal ("include sub-control signal" at S302) for the first time, the searching unit 312 aborts the search and the selecting unit 314 selects the terminal apparatus 300 first found as the management apparatus (S288).

Once the searching unit 312 has searched for all of the frequencies (No at S272), the selecting unit 314 selects the control device 200 that has transmitted a control signal with the highest receiving signal strength among the received control signals as the management apparatus (S290).

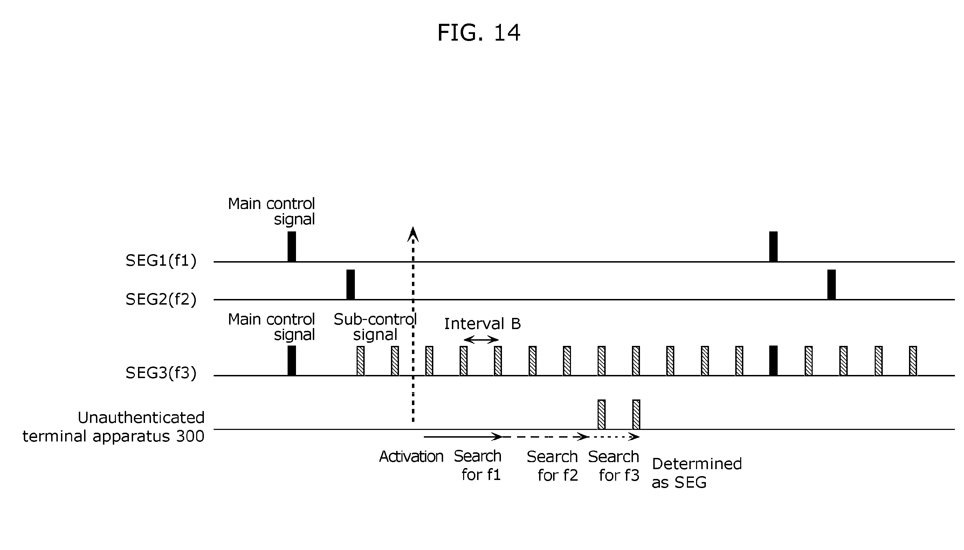

Referring to FIG. 14, the searching unit 312 of the terminal apparatus 300 may store a transmission interval of the sub-control signal beforehand and may set a search period based on the transmission interval of the sub-control signal.

For example, assume that the authentication unit 211 of SEG3 is in an authentication mode "enabled" and a sub-control signal is transmitted at transmission intervals B. As has been described above, when consecutive two control signals are received, the determining unit 313 can determine whether or not the control signals include a sub-control signal. Accordingly, when the searching unit 312 also stores a transmission interval of a main control signal, the searching unit 312 can receive two consecutive control signals by setting a search period such that the search period is extended by the transmission interval B of the sub-control signal after reception of the main control signal. When the searching unit 312 does not store the transmission interval of the main control signal, the searching unit 312 may set the search period to a value obtained by multiplying the transmission interval of the sub-control signal by 2 or more and less than 3.

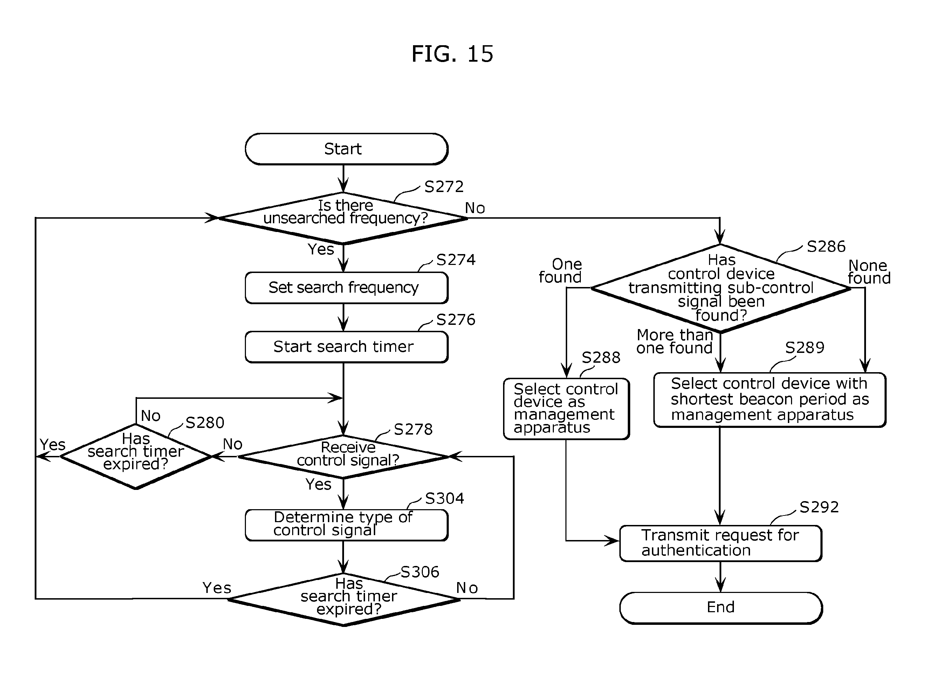

Such a process performed in the terminal apparatus 300 will be described with reference to FIG. 15.

FIG. 15 is a flowchart illustrating a flow of processes in the terminal apparatus 300 according to a variation of the present embodiment. The same operations as those in the terminal apparatus 300 according to the present embodiment illustrated in FIG. 13 are given the same reference signs, and detailed description of those operations will be omitted.

After the terminal apparatus 300 according to the variation receives a control signal (Yes at S278), the determining unit 313 determines the type of the control signal (S304).

Then, the searching unit 312 determines whether or not a search timer has expired (S306). When the search timer has not expired (No at S306), determination is made again at step S278 as to whether a control signal has been received.

On the other hand, when the search timer has expired (Yes at S306), the processes return to step S272. Here, since the value of the search timer is determined on the basis of the interval B of a sub-control signal as has been described above, a necessary and sufficient time can be set as a search period per frequency for the searching unit 312.

Then, when it is determined at step S286 that there are a plurality of control devices that have transmitted a sub-control signal or there is no control device that has transmitted a sub-control signal ("more than one found"/"none found" at S286), a device that has the shortest beacon period is selected as the management apparatus (S289).

Note that there can be various methods for the determining unit 313 according to any of Embodiment 1, Embodiment 2 and the variation of Embodiment 2 to determine whether or not a received control signal includes a sub-control signal, in addition to the methods described above.

For example, the determining unit 313 may store the transmission intervals of the main control signal beforehand and, when the reception intervals of a plurality of control signals received by the receiving unit 311 are shorter than the transmission intervals of the main control signal, the determining unit 313 may determine that the plurality of control signals include a sub-control signal.

Furthermore, in a case where the control signal includes synchronization information which is information about a period of time from transmission of the control signal to next transmission of the main control signal, when the determining unit 313 determines that a period indicated by synchronization information included in a subsequent control signal out of two consecutive control signals is shorter than a period indicated by synchronization information included in the prior control signal, the determining unit 313 may determine that the subsequent control signal is the sub-control signal.

Furthermore, the determining unit 313 may obtain the number of a plurality of control signals received in a predetermined period and, when the number of the control signals is greater than or equal to a predetermined threshold, the determining unit 313 may determine that the plurality of control signals include a sub-control signal.

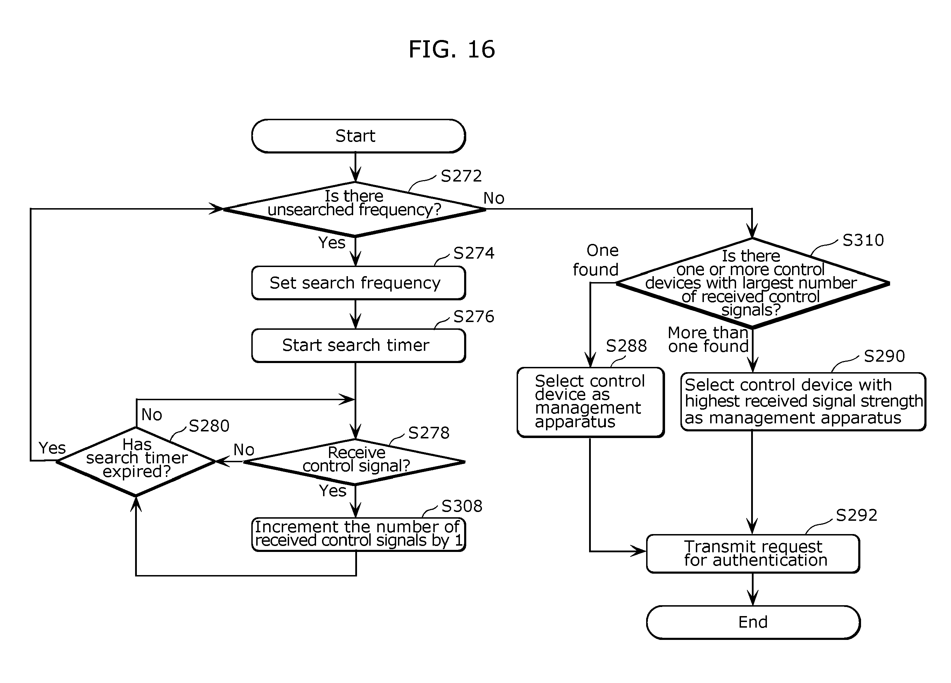

Referring to FIG. 16, the process performed by the determining unit 313 in the terminal apparatus 300 for determining the type of a control signal on the basis of the number of received control signals will be described.

FIG. 16 is a flowchart illustrating a flow of processes for the determining unit 313 to determine the type of a control signal on the basis of the number of received control signals. The same operations as those in the terminal apparatus 300 according to Embodiment 1 illustrated in FIG. 10 are given the same reference signs, and detailed description of those operations will be omitted.

When the receiving unit 311 receives a control signal at a search frequency (Yes at S278), the determining unit 313 increments the number of received control signals by 1 (S308). This operation enables the determining unit 313 to obtain the number of control signals received by the receiving unit 311 in a search period in association with the control device 200 that has transmitted the control signals.

When the searching unit 312 eventually determines that there is not an unsearched frequency (No at S272), the selecting unit 314 compares the numbers of control signals received for each of the control devices 200 (S310) and, when one of the control devices 200 that has received the largest number of control signals can be determined ("one found" at S310), the selecting unit 314 selects the control device as the management apparatus (S288). On the other hand, when there is more than one control device that has received the largest number of control signal, the selecting unit 314 selects one of the control devices that has the highest received signal strength as the management apparatus (S290).

As has been described above, the terminal apparatus 300 according to Embodiment 2 determines the control device 200 transmitting the sub-control signal as being the management apparatus and ends the search for a control signal even when there remains a frequency at which a control signal has not been searched for. This can reduce the time required for searching the control device 200 and therefore the time required for authentication of the terminal apparatus 300.

Furthermore, the authenticated terminal apparatus 300 does not need to receive the sub-control signal and therefore power consumption by its communication function can be saved at a time instant at which transmission of the sub-control signal is scheduled. Consequently, when the terminal apparatus 300 identifies the control device 200 to which the terminal apparatus 300 should transmit a request for authentication, an increase in power consumption in other terminal apparatuses 300 can be further prevented.

### (Embodiment 3)

A control device 200 of a communication system 100 according to Embodiment 3 of the present invention will be described next.

When a signal control unit 214 of the control device 200 according to the present embodiment determines that an authentication unit 211 is not in a state of accepting a request for authentication, the signal control unit 214 prevents a sub-control signal transmitting unit 213 from transmitting a sub-control signal.

More specifically, when the authentication unit 211 receives a request for authentication transmitted from the terminal apparatus 300, the signal control unit 214 prevents the sub-control signal transmitting unit 213 from transmitting a sub-control signal.

Furthermore, when the signal control unit 214 determines that the authentication unit 211 is not in the state of accepting a request for authentication, the signal control unit 214 may allow a main control signal transmitting unit 212 to transmit only a main control signal after preventing the sub-control signal transmitting unit 213 from transmitting the sub-control signal.

This will be described below in further detail.

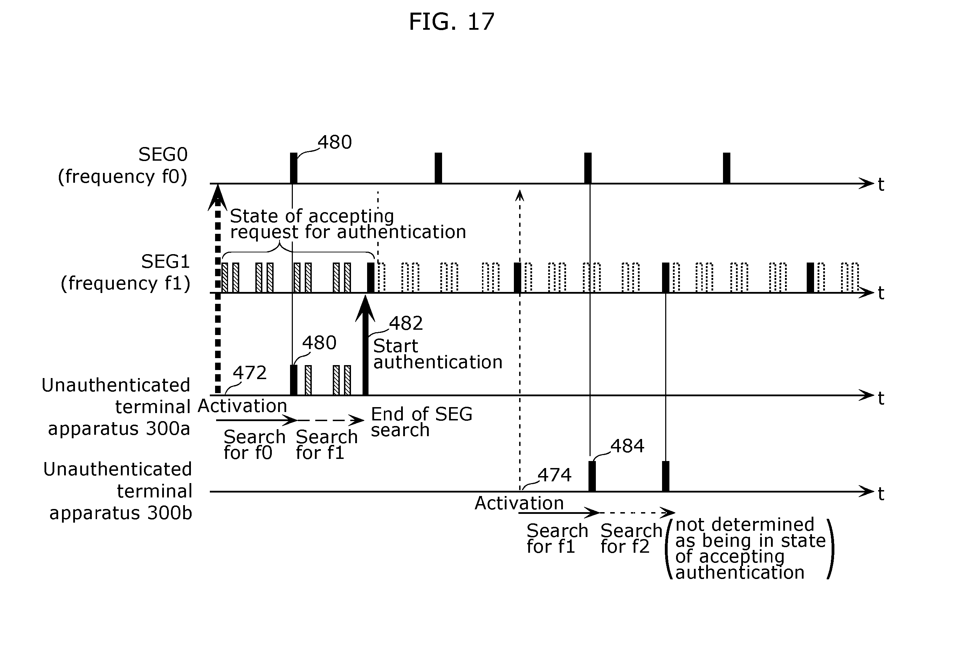

FIG. 17 is a diagram illustrating exemplary timings at which the control device 200 according to the present embodiment transmits a sub-control signal.

Here, SEG1 among control devices 200 is in a state of accepting a request for authentication. Unauthenticated terminal apparatuses 300a and 300b are in a state of searching for a management terminal. It is assumed here that SEG1 is served as the terminal apparatus 300a, and the terminal apparatus 300b is provided at a neighboring home.

As illustrated in FIG. 17, the terminal apparatus 300a searches for the control device 200 that is to act as a management apparatus for the terminal apparatus 300a after a time 472 of activation. Here, the terminal apparatus 300a receives a main control signal 480 from SEG0 during search at frequency f0, then consecutively receives sub-control signals from SEG1 during search at frequency f1. As a result, the selecting unit 314 of the terminal apparatus 300a selects SEG1 as the management apparatus. Furthermore, the selecting unit 314 transmits, through a transmitting unit 315, a signal 482 for requesting SEG 1 to initiate authentication.

This informs the authentication unit 211 of SEG1 that the terminal apparatus 300a has been found as the terminal apparatus 300 to be authenticated. Consequently, the authentication unit 211 ends accepting a request for authentication.

Accordingly, the signal control unit 214 according to the present embodiment determines that the sub-control signal transmitting unit 213 no longer needs to transmit the sub-control signal, prevents the sub-control signal transmitting unit 213 from transmitting the sub-control signal, and allows the main control signal transmitting unit 212 to transmit only a main control signal.

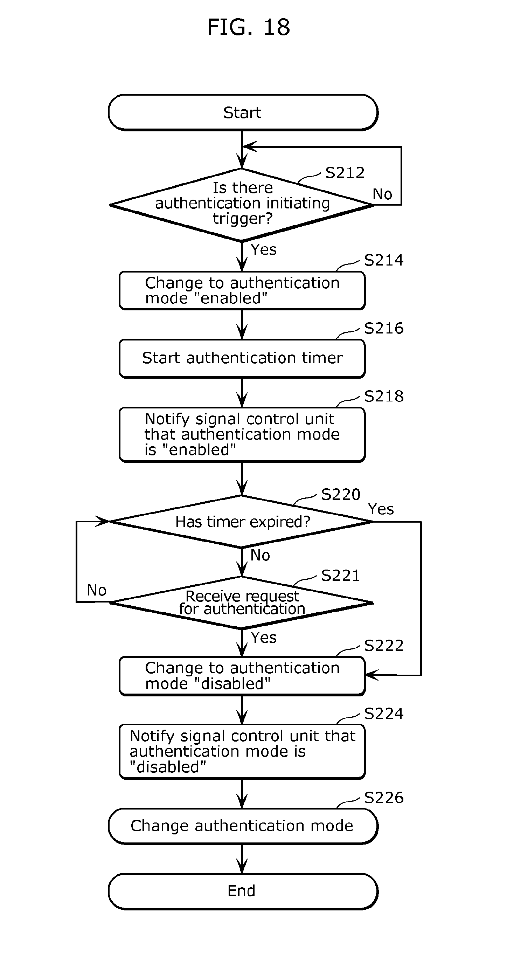

FIG. 18 is a flowchart illustrating a flow of processes performed by the control device 200 according to the present embodiment. The same operations as those in FIG. 8 are given the same reference signs, and detailed description of those operations will be omitted.

When an authentication timer has not expired in the control device 200 according to the present embodiment (No at S220), the authentication unit 211 then determines whether or not to receive a request for authentication from the terminal apparatus 300 (S221). When the authentication unit 211 does not receive the request for authentication (No at S221), the authentication unit 211 waits until expiration of the authentication timer (S220). On the other hand, when receiving the request for authentication (Yes at S221), the authentication unit 211 changes an authentication mode to "disabled" (S222) even when the authentication timer has not expired. Then, the authentication unit 211 notifies the signal control unit that the authentication mode has been changed to "disabled" (S224). As a result, the signal control unit recognizes the change of the authentication mode (S226).

The control device 200 according to the present embodiment described above minimizes the possibility of authentication of a wrong terminal apparatus 300 due to unnecessary transmission of the sub-control signal and can save power consumption in the control device 200.

The control devices 200 and the terminal apparatuses 300 described in Embodiments 1 to 3 do not necessarily include all of the components.

Specifically, the control devices 200 according to any of Embodiments 1 and 2 have the same advantageous effects of the invention without having to include the receiving unit 215. Specifically, the control devices 200 do not need to include a receiving unit if a terminal apparatus 300 operates to unilaterally receive a control signal and a data signal from the control device 200 after finding the control device 200 that should act as the management apparatus.

Furthermore, the terminal apparatus 300 according to any of Embodiments 1 and 3 does not necessarily need to include the searching unit 312. For example, when there is only one frequency of a carrier wave, the advantageous effects of the invention can be provided without having to perform searching by the searching unit 312.

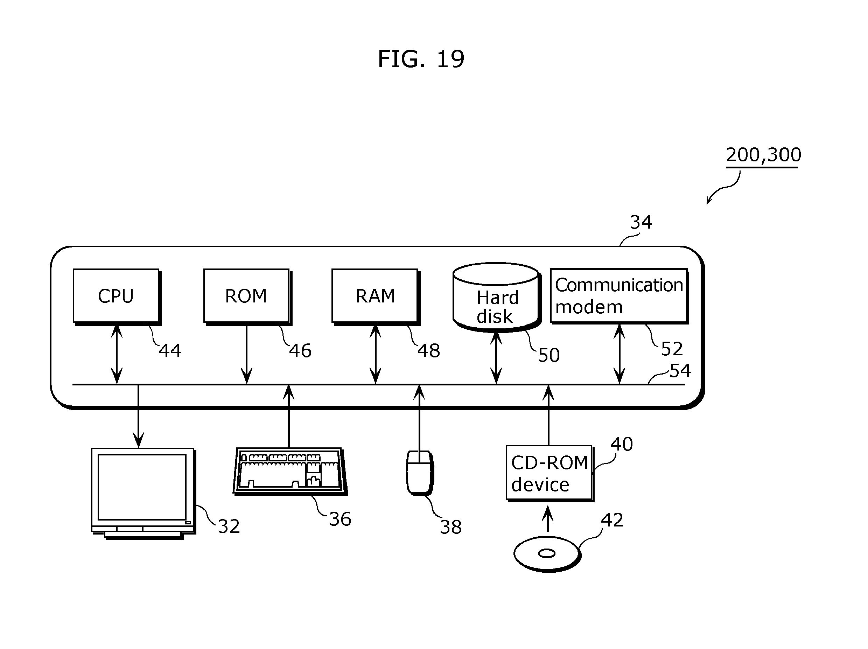

Note that each of the control devices 200 and the terminal apparatuses 300 described in Embodiments 1 to 3 can also be implemented by a computer. FIG. 19 is a block diagram illustrating a hardware configuration of a computer system implementing the control device 200 and the terminal apparatus 300.

Each of the control device 200 and the terminal apparatus 300 includes a computer 34, a keyboard 36 and a mouse 38 for providing instructions to the computer 34, a display 32 for presenting information such as results of computing operations of the computer 34, a CD-ROM (Compact Disc-Read Only Memory) device 40 for reading programs to be executed on the computer 34, and a communication modem (not depicted).

Programs, which are processes performed by the control device 200 and the terminal apparatus 300, are stored on a CD-ROM 42, which is a computer-readable medium, and are read by the CD-ROM device 40. Alternatively, the programs are read through the communication modem 52 via a computer network.

The computer 34 includes a CPU (Central Processing Unit) 44, a ROM (Read Only Memory) 46, a RAM (Random Access Memory) 48, a hard disk 50, the communication modem 52, and a bus 54.

The CPU 44 executes a program read through the CD-ROM device 40 or the communication modem 52. The ROM 46 stores programs and data required for operations of the computer 34. The RAM 48 stores data such as parameters during execution of a program. The hard disk 50 stores programs and data. The communication modem 52 communicates with other computers via a computer network. The bus 54 interconnects the CPU 44, the ROM 46, the RAM 48, the hard disk 50, the communication modem 52, the display 32, the keyboard 36, the mouse 38, and the CD-ROM device 40.

Some or all of the components of any of the apparatuses and devices may be implemented by one system LSI (Large Scale Integrated Circuit). The system LSI is an ultra-multifunctional LSI obtained by integrating multiple components on one chip, and is specifically a computer system including components such as a microprocessor, a ROM, and a RAM. The RAM stores a computer program. The system LSI accomplishes its functions by the microprocessor operating according to computer programs.

Some or all of the components of each of the apparatuses and devices described above may be implemented by an IC card or a single module removable from the device or apparatus. The IC card or module is a computer system including components such as a microprocessor, a ROM, and a RAM. The IC card or module may include the ultra-multifunctional LSI described above. The IC card or module accomplishes its functions by the microprocessor operating according to computer programs. The IC card or module may be tamper-resistant.

The present invention may be the methods described above. The present invention may also be a computer program that implements any of the methods by a computer. The present invention may also be digital signals implemented by the computer program.

The present invention may be a computer-readable recording medium, for example a flexible disk, a hard disk, a CD-ROM, an MO, a DVD, a DVD-ROM, a DVD-RAM, a BD (Blu-ray Disc (registered trademark)), a USB memory, a memory card such as an SD card, or a semiconductor memory on which the computer program or the digital signals are recorded. The present invention may also be digital signals recorded on any of these recording media.

The present invention may also be the computer program or the digital signals transmitted via a telecommunication line, a wireless or wire communication link, a network exemplified by the Internet, or data broadcast.

The present invention may be a computer system including a microprocessor and a memory, wherein the memory stores the computer program and the microprocessor operates according to the computer program.

The program or the digital signals may be implemented by another, independent computer system by recording and transferring the program or the digital signals on any of the recording media given above or by transferring via any of the network and the like given above.

Furthermore, any of the embodiments and the variation may be combined.

The embodiments disclosed herein are to be considered in all respects illustrative and not limitative. The scope of the present invention is defined by the claims rather than the description given above and is intended to include all modifications that fall within the meaning and scope equivalent to the claims.

### [Industrial Applicability]

The present invention is applicable to authentication between a control device and a terminal apparatus and the like interconnected via a wireless network.

### [Reference Signs List]

- 32: Display
- 34: Computer
- 36: Keyboard
- 38: Mouse
- 40: CD-ROM device
- 42: CD-ROM
- 44: CPU
- 46: ROM
- 48: RAM
- 50: Hard disk
- 52: Communication modem
- 54: Bus
- 100: Communication system
- 150: Network
- 200, 200a, 200b, 200c, 200d: Control device
- 211: Authentication unit
- 212: Main control signal transmitting unit
- 213: Sub-control signal transmitting unit
- 214: Signal control unit
- 215, 311: Receiving unit
- 312: Searching unit
- 313: Determining unit
- 314: Selecting unit
- 315: Transmitting unit
- 300, 300a, 300b, 300c, 300d, 300e: Terminal apparatus
- 400: Synchronization information
- 402: Control device address
- 404: Next main control signal reception time
- 410, 414, 430, 440, 450, 480: Main control signal
- 412, 412a, 412b, 432, 452, 453, 454: Sub-control signal
- 482: Signal

## Claims

1. A control device, comprising:
an authentication unit configured to perform authentication of a terminal apparatus to be connected to the control device via a predetermined network;
a main control signal transmitting unit configured to transmit a main control signal at first transmission intervals, the main control signal being a control signal including information for performing data communication in synchronization with the terminal apparatus;
a sub-control signal transmitting unit configured to transmit a sub-control signal that is a control signal notifying the terminal apparatus that the authentication unit is in a state of accepting a request for the authentication; and
a signal control unit configured to control the main control signal transmitting unit and the sub-control signal transmitting unit,
wherein the signal control unit is configured to determine whether or not the authentication unit is in the state of accepting the request for the authentication, and cause the sub-control signal transmitting unit to transmit the sub-control signal at second transmission intervals when it is determined that the authentication unit is in the state of accepting the request for the authentication, the second transmission intervals being shorter than the first transmission intervals.

2. The control device according to Claim 1,
wherein the signal control unit is configured to prevent the sub-control signal transmitting unit from transmitting the sub-control signal when it is determined that the authentication unit is not in the state of accepting the request for the authentication.

3. The control device according to Claim 1,
wherein the signal control unit is configured to prevent the sub-control signal transmitting unit from transmitting the sub-control signal when the authentication unit receives the request for the authentication, the request being transmitted from the terminal apparatus.

4. The control device according to Claim 2,
wherein the signal control unit is configured to cause the main control signal transmitting unit to transmit only the main control signal after preventing the sub-control signal transmitting unit from transmitting the sub-control signal, when it is determined that the authentication unit is not in the state of accepting the request for the authentication.

5. The control device according to Claim 1,
wherein the main control signal includes information on a period from transmission of the main control signal to transmission of a next main control signal, and
the sub-control signal includes information on a period from transmission of the sub-control signal to transmission of a next main control signal.

6. The control device according to Claim 1,
wherein the signal control unit is configured to control the sub-control signal transmitting unit so that the sub-control signal transmitting unit transmits the sub-control signal at intervals according to a pattern in which the sub-control signal has a predetermined periodicity.

7. The control device according to Claim 1,
wherein the predetermined network is a wireless communication network.

8. The control device according to Claim 1,
wherein the authentication unit is configured to start accepting the request for the authentication when obtaining an input from a user.

9. A terminal apparatus, comprising:
a receiving unit configured to receive a control signal transmitted by a control device to be connected to the terminal apparatus via a predetermined wireless network;
a determining unit configured to determine whether or not the control signal includes a sub-control signal that is a control signal indicating that the control device that transmits the control signal is in a state of accepting a request for an authentication for authenticating a terminal apparatus that performs data communication;
a selecting unit configured to select the control device that has transmitted the sub-control signal as a management apparatus that is a control device to which the authentication is requested, when the determining unit determines that the control signal includes the sub-control signal; and
a transmitting unit configured to transmit, to the management apparatus, the request for the authentication.

10. The terminal apparatus according to Claim 9,
wherein the selecting unit is configured to select, as the management apparatus, the control device that has transmitted the control signal determined by the determining unit for a first time as including the sub-control signal.

11. The terminal apparatus according to Claim 9,
wherein the control signal is a control signal transmitted by the control device, and includes synchronization information indicating a period until a main control signal is next transmitted, the main control signal being a control signal including information for performing data communication in synchronization with a terminal apparatus, and
the determining unit is configured to determine that two consecutive control signals include the sub-control signal when the receiving unit receives a subsequent control signal that is one of the two consecutive control signals, in a period from receipt of a prior control signal to a time indicated by the synchronization information included in the subsequent control signal, the prior control signal being the other of the two consecutive signals.

12. The terminal apparatus according to Claim 9,
wherein the determining unit is configured to pre-store transmission intervals of a main control signal that is a control signal including information for the control device performing data communication in synchronization with a terminal apparatus, and determine that a plurality of control signals including the control signal include the sub-control signal when reception intervals of the control signals are shorter than the transmission intervals of the main control signal, the control signals being received by the receiving unit.

13. The terminal apparatus according to Claim 9,
wherein the determining unit is configured to obtain the number of control signals which are received by the receiving unit for a predetermined period, and determine that the control signals include the sub-control signal when the number of control signals is larger than or equal to a predetermined threshold.

14. The terminal apparatus according to Claim 9,
wherein the control signal includes synchronization information indicating a period until a main control signal is next transmitted, the main control signal including information for the control device performing data communication in synchronization with a terminal apparatus, and
the determining unit is configured to determine that a subsequent control signal is the sub-control signal when a period indicated by synchronization information included in the subsequent control signal is shorter than a period indicated by synchronization information included in a prior control signal, the subsequent control signal and the prior control signal being two consecutive signals.

15. The terminal apparatus according to Claim 9, further comprising
a searching unit configured to set predetermined frequencies of carrier waves as frequencies of the control signal received by the receiving unit, and cause the receiving unit to receive the control signal only for a predetermined search period at each of the frequencies,
wherein the searching unit is configured to pre-store transmission intervals of the sub-control signal, and set the predetermined search period based on the transmission intervals of the sub-control signal.

16. A communication system, comprising:
the control device according to one of Claims 1 to 8; and
the terminal apparatus according to one of Claims 9 to 15.

17. A method for controlling a control device, comprising:
transmitting, at first transmission intervals, a main control signal to a terminal apparatus to be connected to the control device via a predetermined network, the main control signal being a control signal including information for performing data communication in synchronization with the terminal apparatus;
determining whether or not an authentication unit that performs authentication of the terminal apparatus is in a state of accepting a request for an authentication; and
transmitting a sub-control signal at second transmission intervals when it is determined that the authentication unit is in the state of accepting the request for the authentication, and not transmitting the sub-control signal when it is determined that the authentication unit is not in the state of accepting the request for the authentication, the second transmission intervals being shorter than the first transmission intervals, and the sub-control signal being a control signal notifying the terminal apparatus that the authentication unit is in the state of accepting the request for the authentication.

18. A program causing a computer to execute the method for controlling a control device according to Claim 17.

19. A method for controlling a terminal apparatus, the method comprising:
receiving a control signal transmitted by a control device to be connected to the terminal apparatus via a predetermined wireless network;
determining whether or not the control signal includes a sub-control signal that is a control signal indicating that the control device that transmits the control signal is in a state of accepting a request for an authentication for authenticating a terminal apparatus that performs data communication;
selecting the control device that has transmitted the sub-control signal as a management apparatus that is a control device to which the authentication is requested, when it is determined that the control signal includes the sub-control signal; and
transmitting, to the management apparatus, the request for the authentication.

20. A program causing a computer to execute the method for controlling a terminal apparatus according to Claim 19.
